# FASCICULE DE BREVET EUROPEEN

(11) **EP 4 338 933 B1**
(45) Date de publication et mention de la délivrance du brevet: **09.07.2025**
(21) Numéro de dépôt: 23190318.8
(22) Date de dépôt: 08.08.2023
(51) Int. Cl.: B29C 53/36, B29C 67/00

(54) **PROCÉDÉ DE FABRICATION D'UNE MATELASSURE DE SIÈGE, MATELASSURE DE SIÈGE EN TANT QUE TELLE, ET SIÈGE EN TANT QUE TEL**
VERFAHREN ZUR HERSTELLUNG EINER SITZPOLSTERUNG, SITZPOLSTERUNG ALS SITZPOLSTER UND SITZ, DER ALS SOLCHES VERWENDET WIRD
METHOD FOR MANUFACTURING A SEAT PADDING, SEAT PADDING AS SUCH, AND SEAT AS SUCH

(30) Priorité: 31.08.2022 FR 2208739
(43) Date de publication de la demande: 20.03.2024
(73) Titulaire: FAURECIA Sièges d'Automobile, 92000 Nanterre (FR); Indorama Ventures Mobility Obernburg GmbH, 63784 Obernburg (DE)
(72) Inventeur: CLUET, Mathieu, 91150 ETAMPES (FR); GAZANIOL, Benoît, 91290 ARPAJON (FR)
(74) Mandataire: Plasseraud IP

(56) Documents cités:
- WO-A1-2006/046541
- WO-A1-2012/157289
- CA-A1- 2 348 034
- US-B2- 10 138 582

## Description

La présente divulgation est relative à un procédé de fabrication d'une matelassure de siège comprenant un enchevêtrement 3D de fibres thermoplastiques, continues, disposées irrégulièrement, typiquement aléatoirement, formant des boucles soudées entre elles, présentant de manière notable des bordures, en périphérie, renforcées et densifiées.

La présente divulgation concerne encore une matelassure en tant que telle susceptible d'être obtenue par le procédé selon la présente divulgation, ainsi qu'un siège comprenant une telle matelassure et une coiffe fixée à la matelassure.

### Domaine technique

La présente divulgation relève du domaine des sièges de véhicules automobiles qui comprennent une structure typiquement métallique, avec typiquement un châssis d'assise et un châssis de dossier. La structure est classiquement obtenue par techniques d'emboutissage. Les sièges comportent encore des matelassures, y compris une couche de matelassure d'assise et une couche de matelassure de dossier qui confèrent le moelleux de l'assise et du dossier, et participent au confort au siège. Ces matelassures sont habillées par des coiffes recouvrant les matelassures et qui peuvent être typiquement fixées à des inserts de fixation, internes à la matelassure.

### Technique antérieure

Les matelassures d'assise et de dossier sont classiquement en mousse de polymère d'uréthane, et mises en forme dans des moules. La matelassure en polyuréthane est classiquement recouverte d'une coiffe Des inserts de fixation servant à la fixation de la coiffe sont piégés dans la mousse, par surmoulage. Les matelassures en mousse de polyuréthane donnent satisfaction, mais peuvent en condition humide, conserver l'humidité.

On connait US10138582 B2 divulgue un non tissé qui trouve des applications variées, à savoir comme textile dans un vêtement (shirt, chaussure, pantalon), tapisserie pour meuble,et plus généralement dans l'industrie automobile, ou encore l'aérospatial. Le non tissé comprend des filaments polymères thermoplastiques qui sont soudés en eux. US10138582 B2 enseigne la présence d'une ou plusieurs régions fusionnées, qui ont subi un traitement à la chaleur (et de pression), afin de changer les propriétés du textile. Les régions fusionnées peuvent rester filamenteuses, encore être fusionnées jusqu'à obtenir un aspect non filamenteux : les régions fusionnées peuvent permettre de changer la perméabilité, l'étirabilité ou encore la durabilité.

### Résumé

La présente divulgation vient améliorer la situation.

Il est proposé un procédé de fabrication d'une matelassure de siège comprenant:
- /A/ Fourniture d'une matelassure comprenant un enchevêtrement 3D de fibres thermoplastiques , continues disposées irrégulièrement, typiquement aléatoirement, formant des boucles soudées entre elles, la matelassure présentant une direction en longueur, une direction en largueur et une direction en épaisseur, ainsi qu'une bordure, en périphérie s'étendant le long des chants de la matelassure,
- /B/ Pressage à chaud de l'enchevêtrement 3D de fibres, en tout ou partie de la périphérie de la matelassure, de sorte à réaliser une bordure densifiée et rigidifiée de la matelassure, par rapport à une zone centrale de la matelassure de moindre densité et de moindre rigidité.

Le pressage à chaud en /B/ génère une bordure densifiée et rigidifiée qui est attenante par une extrémité proximale à la zone centrale de la matelassure, et présentant une extrémité distale libre, et dans lequel la bordure densifiée et rigidifiée s'étend suivant son épaisseur, sur une portion de l'épaisseur de la zone centrale, en longueur le long du chant de la périphérie, et en largeur, depuis son extrémité proximale jusqu'à son extrémité distale,
et dans lequel la bordure densifiée et rigidifiée forme un épaulement avec un chant libre de la zone centrale la matelassure
et dans lequel le procédé prévoit :
   - /C/ le repliage de la bordure densifiée et rigidifiée contre le chant libre de la zone centrale.

Les caractéristiques exposées dans les paragraphes suivants peuvent, optionnellement, être mises en œuvre, indépendamment les unes des autres ou en combinaison les unes avec les autres :
- la bordure densifiée et rigidifiée en /A/ présente une première face s'étendant en prolongement d'une des faces de la portion centrale de la matelassure.
- la dimension en largeur de la bordure densifiée et rigidifiée délimitée entre l'extrémité proximale et l'extrémité distale est comprise entre 80% et 120% de la dimension de l'épaisseur de la zone centrale telle que 100% de l'épaisseur.
- l'étape de fourniture /A/ peut comprendre :
   - /A1/ Extrusion d'un polymère thermoplastique dans une filière d'extrusion comprenant des buses d'extrusion réparties suivant une direction en longueur et suivant une direction en largeur de la filière d'extrusion, générant un rideau de fibres continues fondues, chutant par gravité,
   - /A2/ Réception du rideau de fibres continues fondues chutant par gravité sur un ou des élément support avec une génération d'un enchevêtrement 3D de fibres selon une répartition irrégulièrement, typiquement aléatoirement avec fusion de boucles entre les fibres continues,
   - /A3/ éventuellement solidification de l'enchevêtrement 3D de fibres par immersion dans un liquide de refroidissement.
- le pressage à chaud sur tout ou partie de la périphérie peut entraîner une compression et une réduction partielle de l'épaisseur de l'enchevêtrement 3D d'au moins 60%, voire d'au moins 70%, voire d'au moins 80%.

Le procédé peut présenter tout ou partie des caractéristiques suivantes
- les fibres sont des fibres creuses et/ou fibres pleines, de diamètre compris entre 0,2 mm et 2 mm, préférentiellement entre 0,3 mm et 1,5 mm,
- les fibres comprennent un polymère thermoplastique, la composition des fibres comprenant au moins 95% en poids de PET,
et dans lequel l'enchevêtrement 3D de la matelassure présente une masse volumique apparente comprise entre 20kg/m3 et 70 kg/m3 , en particulier entre 45 kg/m3 et 65 kg/m3 en dehors de la ou des zones densifiées et rigidifiées.

Selon un second aspect, la présente divulgation est relative à une matelassure de siège susceptible d'être obtenue selon le procédé de la présente divulgation comprenant un enchevêtrement 3D de fibres continues thermoplastiques disposées irrégulièrement, typiquement aléatoirement, formant des boucles soudées entre elles entre les fibres, et dans laquelle :
- les fibres sont des fibres creuses et/ou fibres pleines, en particulier de diamètre compris entre 0,2 mm et 2 mm, préférentiellement entre 0,3 mm et 1,5 mm,
- les fibres comprennent un polymère thermoplastique, la composition des fibres comprenant en particulier au moins 95% en poids de PET,

la matelassure comprenant une bordure périphérique densifiée et rigidifiée obtenue par pressage à chaud de l'enchevêtrement 3D sur tout ou partie de la périphérie
et dans laquelle l'enchevêtrement 3D de la matelassure présente une masse volumique apparente de préférence comprise entre 20 kg/m3 et 70 kg/m3 en particulier entre 45 kg/m3 et 65 kg/m3 en dehors des zones densifiées et rigidifiées périphériques.

Selon la présente divulgation, la bordure densifiée et rigidifiée est attenante par une extrémité proximale à la zone centrale de la matelassure de moindre densité, et présente une extrémité distale libre, la bordure densifiée et rigidifiée étant repliée contre un chant libre de la zone centrale de la matelassure, en couvrant le chant libre de la zone centrale.

Selon un troisième aspect, la présente divulgation est relative à un siège de véhicule comprenant :
- une matelassure selon la présente divulgation,
- une coiffe recouvrant la matelassure, le coiffe recouvrant une surface supérieure de la matelassure, ainsi qu'un flanc de la matelassure, le flanc formé par la bordure densifiée et rigidifiée, repliée contre le chant libre de la zone centrale de la matelassure.

### Brève description des dessins

D'autres caractéristiques, détails et avantages apparaîtront à la lecture de la description détaillée ci-après, et à l'analyse des dessins annexés, sur lesquels :
**Fig. 1**

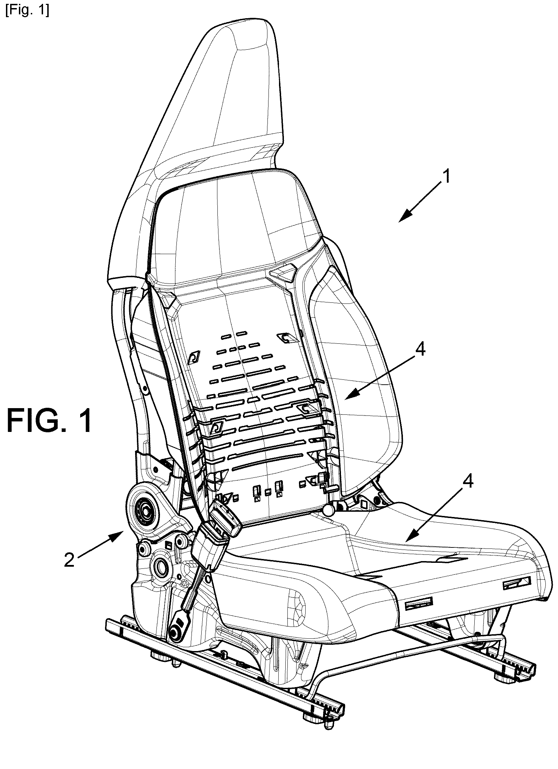

   [Fig. 1] est une vue d'un siège de véhicule automobile, selon un mode de réalisation, illustrant la structure métallique du siège supportant une interface plastique de dossier destinée à recevoir une couche de matelassure de dossier et une interface d'assise, plastique, destinée à recevoir une couche de matelassure d'assise, les matelassures de dossier et d'assise étant non illustrées.
**Fig. 2**

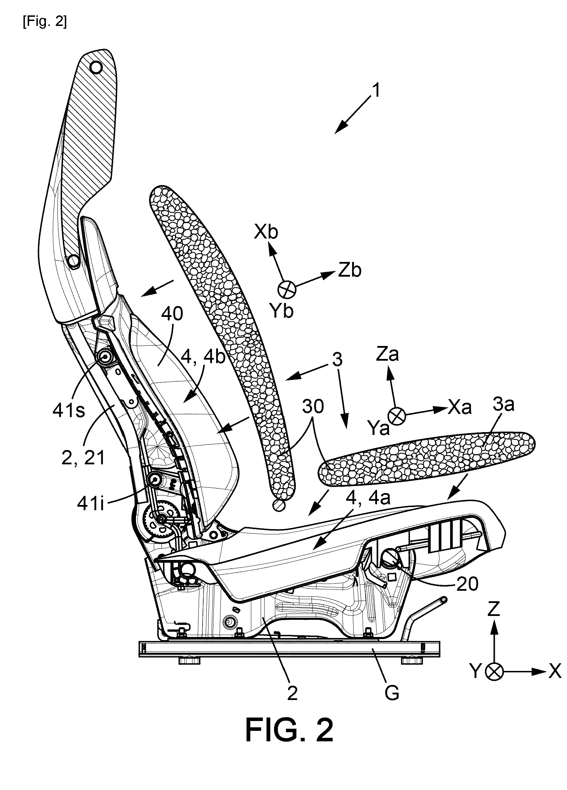

   [Fig. 2] est une vue de coupe du siège de la figure 1, sur lequel on ajoute une couche de matelassure de dossier, et une couche de matelassure d'assise, selon la présente divulgation comprenant un enchevêtrement aléatoire, en trois dimensions (3D) de fibres continues thermoplastiques comprenant des boucles entre des fibres thermosoudées, les unes aux autres.
**Fig. 3**

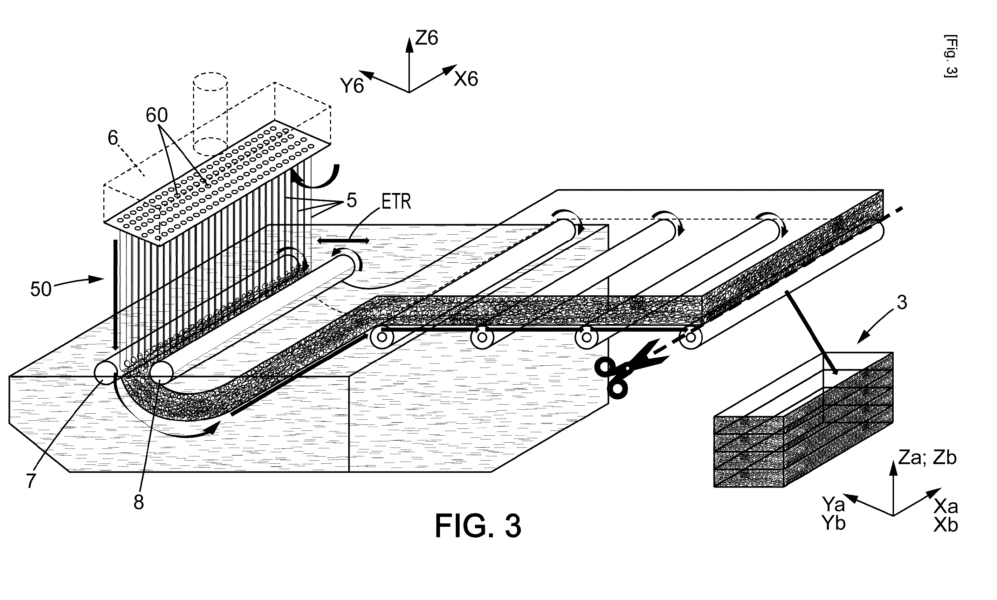

   [Fig. 3] est une vue schématique du procédé de fabrication permettant la fabrication de l'enchevêtrement 3D comprenant une extrusion d'un polymère thermoplastique dans une filière d'extrusion générant un rideau de fibres continues fondues, chutant par gravité, la réception du rideau de fibres continues fondues entre deux organes de guidage contrarotatifs, avec une génération d'un enchevêtrement 3D de fibres et la solidification de l'enchevêtrement 3D de fibres par immersion dans un liquide de refroidissement, puis l'obtention de matelassure par des découpes transversales au sens de défilement.
**Fig. 4**

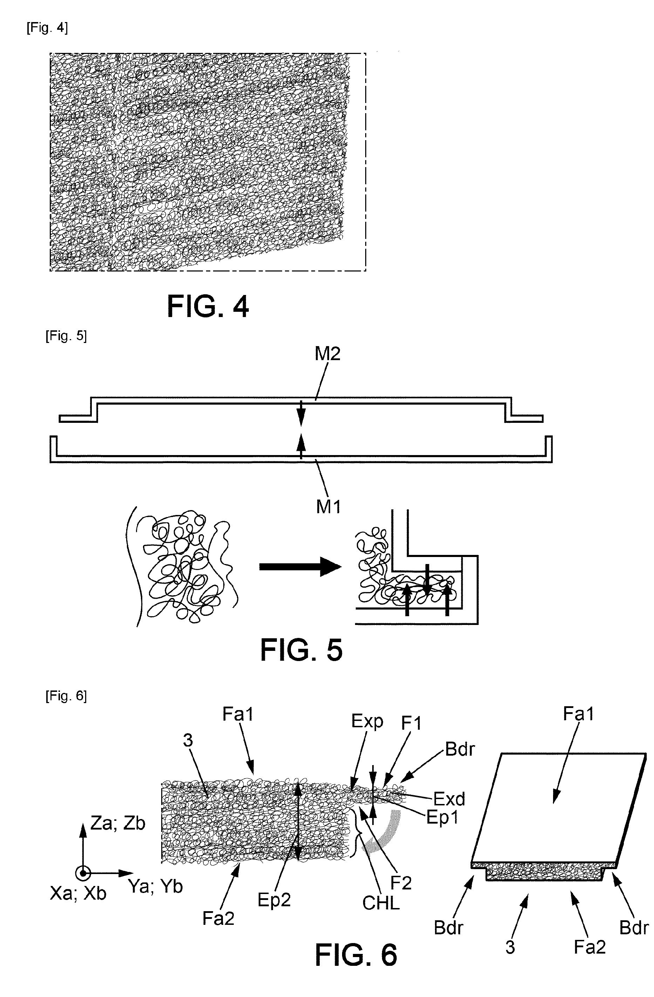

   [Fig. 4] est une vue d'un chant de la matelassure obtenue selon le procédé de la figure 3, le chant présentant un état de surface irrégulier en particulier lorsqu'il résulte des découpes transversales selon le procédé de fabrication illustré à la figure 3.
**Fig. 5**
   [Fig. 5] une vue d'un premier moule M1, d'un deuxième moule M2 permettant l'obtention de bordures rigidifiées et densifiées, par thermoformage des bordures, entraînant une réduction partielle de l'épaisseur EP de l'enchevêtrement 3D d'au moins 60%, voire d'au moins 70%, voire d'au moins 80%.
**Fig. 6**
   [Fig. 6] est :
   - à droite une vue de la matelassure après pressage à chaud et formation de deux bordures densifiées et rigidifiées,
   - à gauche, une vue de détail d'une des bordures rigidifiées et densifiées qui est attenante à une portion centrale de la matelassure par une extrémité proximale, et terminée par une extrémité distale libre, la bordure rigidifiée et densifiée prolongeant une des faces de la matelassure, la bordure rigidifiée et densifiée étant obtenue par une réduction d'épaisseur de l'enchevêtrement 3D, par rapport à une portion centrale, la bordure rigidifiée et densifiée formant un épaulement avec la portion centrale, l'épaulement formé entre la bordure rigidifiée et densifiée et un chant libre de la portion centrale.
**Fig. 7**

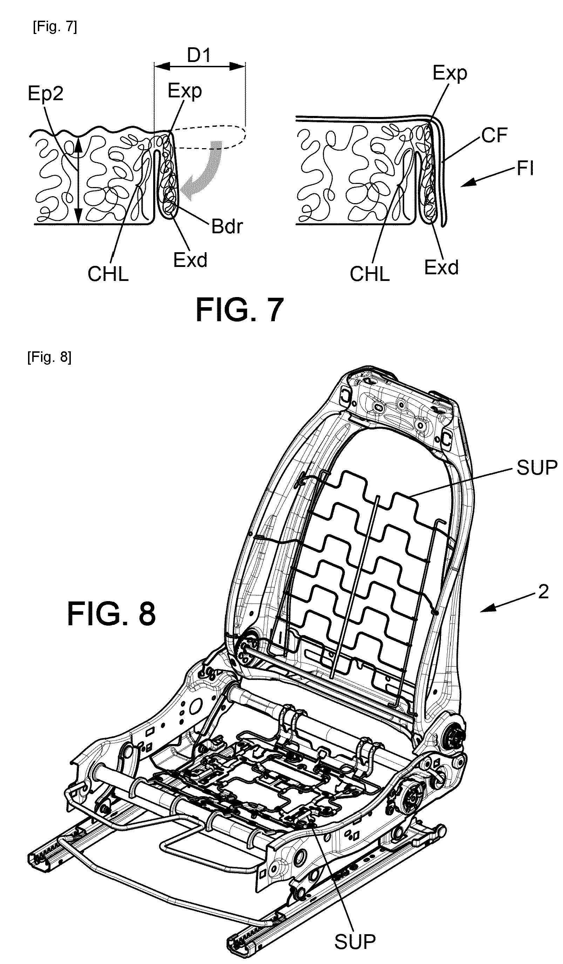

   [Fig. 7] est une vue de détail de la figure 6 avec :
   - à gauche, après repliage à 90° de la bordure rigidifiée contre le chant libre de la portion centrale,
   - à droite, après repliage à 90° de la bordure rigidifiée et mise en place d'une coiffe.
**Fig 8**
   [Fig. 8] est une vue d'un siège selon un autre mode de réalisation comprenant une suspension associée à la structure d'assise et une suspension associée à la structure de dossier.
**Fig 9**

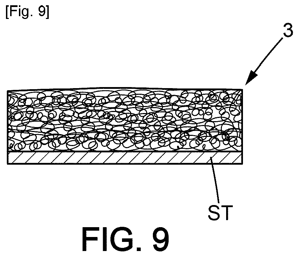

   [Fig. 9] est une vue d'un ensemble comprenant une matelassure et un support associé à la matelassure.

### Description des modes de réalisation

Aussi, la présente divulgation est relative à un siège 1 comprenant :
- une structure 2 typiquement métallique,
- une matelassure 3.
- éventuellement une interface 4 située entre la structure 2 et la matelassure 3, et notamment comme illustrée selon le mode de réalisation des figures 1 et 2.

Le siège comporte encore typiquement une coiffe CF (non illustrée à la figure 1) venant recouvrir la matelassure 3, en étant typiquement fixée à la matelassure.

A la figure 2, un repère XYZ est illustré, la direction X orientée suivant la direction de coulissement de glissière G entre la structure 2 de siège et un plancher du véhicule, la direction Y, orientée suivant une direction transversale du siège, et la direction Z selon la verticale

La structure 2 typiquement en métal comprend un châssis d'assise 20 et une châssis de dossier 21, typiquement articulé autour d'un axe de rotation transversal, typiquement au moyen d'articulations du type continue.

Le châssis d'assise 20 comprend typiquement :
- deux flasques latéraux, s'étendant depuis un bord arrière de l'assise et jusqu'à un bord avant, suivant la direction X, ou légèrement incliné par rapport à la direction longitudinale X (typiquement de plus ou moins 30 degrés) autour d'un axe transversal et,
- une pièce frontale, reliant deux extrémités avant des flasques, et s'étendant suivant la direction transversale. La pièce frontale et les flasques sont typiquement des tôles conformées, par exemple, par les techniques d'emboutissage.

Le châssis de dossier comprend typiquement des montants latéraux, s'étendant en hauteur, ainsi qu'une traverse supérieure reliant deux extrémités supérieures des montants. Les montants et la traverse supérieure sont typiquement des tôles conformées, par exemple par les techniques d'emboutissage.

La matelassure 3 comprend typiquement une couche matelassure de d'assise 3a qui confère le confort de l'assise et qui est reçue sur une interface 4a d'assise intercalée entre le châssis d'assise 20 et la couche de matelassure d'assise 3a et/ou la matelassure 3 comprend typiquement une couche matelassure de dossier 3b qui confère le confort du dossier et qui est reçue sur une interface 4b de dossier qui est intercalée entre le châssis de dossier 21 et la couche de matelassure de dossier 3b.

La matelassure 3, en particulier la couche de matelassure d'assise 3a et/ou la couche de matelassure de dossier 3b comprend un enchevêtrement en trois dimension (en « 3D ») de fibres 5 continues, thermoplastiques, disposées irrégulièrement, typiquement aléatoirement, formant des boucles soudées entre elles entre les fibres 5.

Les fibres peuvent être des fibres creuses et/ou fibres pleines. Les fibres peuvent être de diamètre compris entre 0,2 mm et 2 mm, préférentiellement entre 0,3 mm et 1,5 mm. On entend par « continues » dans « fibres continues » le fait que les fibres sont de longueur très supérieure au diamètre des fibres, et du fait du procédé qui est décrit ci-après, typiquement au moins d'un rapport 100, voire 500, voire 1000. Bien souvent, et notamment comme compréhensible du procédé de fabrication, les fibres s'étendent typiquement depuis une première extrémité sur un premier bord de l'enchevêtrement 3D et jusqu'à une deuxième extrémité sur un deuxième bord de l'enchevêtrement AD, opposé au premier bord.

Les fibres 5 comprennent un polymère thermoplastique, la composition des fibres comprenant de préférence au moins 95% en poids de PET. Par exemple la composition des fibres, voire de la matelassure comprend :
- 95% à 99% en poids d'un premier polymère de la famille des polyesters tel que le PET (Polytéréphtalate d'éthylène),
- 1% à 5% en poids d'un second polymère de la famille des polyesters tel que le PTT (Polytéréphtalate de triméthylène )ou PBT (Polybutylène téréphtalate). La somme du PET et du PTT (ou PBT) peut faire 100% en poids des fibres, voire de la matelassure L'enchevêtrement 3D de la matelassure 5 peut présenter une masse volumique apparente comprise entre 20 kg/m³ et 70 kg/m³, voire entre 45 kg/m³ et 65 kg/m³.

De préférence, les vides entre les fibres 5 de l'enchevêtrement 3D de fibres 5 de la matelassure 3 sont laissés libres. On obtient une matelassure très respirante, en raison des nombreux inter-espaces (vides) entre les fibres qui favorisent la circulation d'air.

La couche de matelassure d'assise 3a, s'étend en longueur suivant une direction longitudinale Xa de l'assise d'un bord arrière jusqu'à un bord avant de l'assise, et en largeur suivant une direction transversale de l'assise d'un premier bord latéral jusqu'à un second bord latéral, ainsi qu'en épaisseur suivant une direction orthogonale Za, qui est orthogonale à la direction longitudinale et à la direction transversale de l'assise. L'épaisseur de la couche de matelassure d'assise peut être comprise entre 60mm à 100mm.

La couche de matelassure de dossier 3b s'étend en longueur suivant une direction longitudinale Xb du dossier d'un bord inférieur vers un bord supérieur du dossier, et en largeur suivant une direction transversale Yb du dossier d'un premier bord latéral jusqu'à un second bord latéral, ainsi qu'en épaisseur suivant une direction orthogonale Zb qui est orthogonale à la direction longitudinale et à la direction transversale du dossier. L'épaisseur de la couche de matelassure de dossier peut être comprise 15 mm à 50 mm.

L'interface 4, en particulier l'interface d'assise 4a ou l'interface de dossier 4b peut comprendre un matériau entièrement ou partiellement en plastique. Par exemple, ladite interface 4 est en ABS (acrylonitrile butadiène styrène) et/ou PC (Polycarbonate) et/ou P/E (Copolymère Polypropylène/Polyéthylène).

De manière générale, l'interface 4, en particulier en particulier l'interface d'assise 4a ou l'interface de dossier 4b peut comprendre une coque. La coque peut être une pièce moulée ou une pièce thermoformée.

En particulier ladite interface de dossier 4b peut comprendre, comme illustré à la figure 2 :
- au moins une coque déformable 40 de dossier, recevant la matelassure qui est une matelassure de dossier 3b, ladite coque déformable 40 étant configurée pour prendre différentes formes notamment depuis une position initiale de lordose lombaire et en particulier jusqu'à une position finale de cyphose lombaire, en réponse à une charge variable appliqué par le dos de l'occupant du siège,
- un système couplant ladite coque déformable 40 de dossier à la structure comprenant des liens 41s supérieurs de contrôle de déplacement, et des liens 41i inférieurs de contrôle de déplacement.

Les liens 41s supérieurs de contrôle de déplacement et/ou les liens 41i inférieures de contrôle de déplacement sont typiquement des liens articulés qui peuvent comprendre des bielles.

Selon un autre mode de réalisation la matelassure 8, en particulier d'assise et de dossier peut être associée à une structure de siège, qui comprend une suspension SUP typiquement métallique, en particulier, telle qu'illustrée à la figure 8 :
- une suspension SUP typiquement métallique reliant une entretoise avant et une entretoise arrière d'une structure d'assise, les entretoises reliant un flasque droit et un flasque gauche de la structure d'assise,
- une suspension SUP typiquement métallique reliant un montant droite et un montant gauche d'une structure de dossier.

Encore, selon un autre mode de réalisation, la matelassure peut être associée à un support ST, typiquement préassemblé la matelassure, et qui autorise notamment un assemblage à une structure de siège typiquement dépourvue d'interface ou de suspension.,

La présente divulgation est relative à un procédé de fabrication d'une matelassure 3 de siège comprenant :
- /A/ Fourniture d'une matelassure 3 comprenant un enchevêtrement 3D de fibres thermoplastiques 5, continues disposées irrégulièrement (typiquement aléatoirement) formant des boucles soudées entre elles, la matelassure présentant une direction en longueur Xa, Xb, une direction en largueur Ya, ; Yb et une direction en épaisseur Za, Zb ainsi qu'une périphérie sur des chants de la matelassure
- /B/ Pressage à chaud de l'enchevêtrement 3D de fibres, en tout ou partie de la périphérie de la matelassure, de sorte à réaliser une bordure densifiée et rigidifiée Bdr de la matelassure, de densité supérieure par rapport à une zone centrale de la matelassure de moindre densité et de moins rigidité.

L'étape de fourniture /A/ peut comprendre, notamment telle qu'illustrée schématiquement à la figure 3 :
- /A1/ Extrusion d'un polymère thermoplastique dans une filière d'extrusion 6 comprenant des buses d'extrusion 60 réparties suivant une direction en longueur X6 et suivant un direction en largeur Y6 de la filière d'extrusion, générant un rideau de fibres continues fondues 50, chutant par gravité,
- /A2/ Réception du rideau de fibres continues fondues chutant par gravité sur un ou des organes supports, en particulier entre deux organes de guidage 7, 8 contrarotatifs, avec une génération d'un enchevêtrement 3D de fibres 5 selon une répartition irrégulière, en particulier aléatoire avec fusion des boucles entre les fibres continue, en particulier selon une couche d'épaisseur déterminée par l'entraxe ETR entre les deux organes contrarotatifs 7, 8
- /A3/ Solidification de l'enchevêtrement 3D de fibres par immersion dans un liquide de refroidissement 9, tel que de l'eau.

Les buses d'extrusion 60 sont de préférence réparties régulièrement suivant la direction en longueur X6 de la filière d'extrusion, ainsi qu'en largeur suivant la direction en largeur Y6.

L'épaisseur de la couche de matelassure formée par l'enchevêtrement peut être réglée, par un réglage de l'entraxe entre les deux organes de guidage 7,8.

En /A2/, les deux organes de guidage 7, 8 sont entrainés en rotation à une vitesse, typiquement inférieure la vitesse de chute des fibres, assurant une accumulation des fibres à l'origine de la formation de boucles qui se thermosoudent entre fibres, générant l'enchevêtrement irrégulier ou aléatoire en trois dimensions. La solidification en /A/ est obtenue juste après l'étape /B/, les deux organes de guidage pouvant être immergés à mi-hauteur, à cet effet.

La température de l'extrusion mise en œuvre en /A/ dans la filière d'extrusion est typiquement comprise entre 180°Cet 240°C. La filière d'extrusion est alimentée en granulés de polymère thermoplastique.

La couche d'enchevêtrement 3D de fibres, en défilement continu, est ensuite guidée, en dehors du réservoir de liquide de refroidissement pour être séchée, typiquement par des secousses/vibrations. La couche en défilement est ensuite découpée, par des coupes transversales, permettant l'obtention de différentes matelassures 3, et comme visibles à la figure 3. Ces matelassures 3 s'étendent en longueur, par exemple en longueur suivant la direction longitudinale Xa de la couche de matelassure d'assise (ou en longueur suivant la direction longitudinale Xb de la couche de matelassure de dossier), typiquement suivant la direction transversale au défilement de la couche.

Alternativement au procédé continu illustré à la figure 3, une variante peut être mise en œuvre dans laquelle on obtient la matelassure comprenant un enchevêtrement 3D de fibres thermoplastiques, continues disposées irrégulièrement, typiquement aléatoirement formant des boucles soudées entre elles par :
- /A1/ Extrusion d'un polymère thermoplastique dans une filière d'extrusion comprenant des buses d'extrusion réparties suivant une direction en longueur et suivant un direction en largeur de la filière d'extrusion, générant un rideau de fibres continues fondues, chutant par gravité,
- /A2/ Réception du rideau de fibres continues fondues chutant par gravité dans une cavité de moulage d'un outillage de moulage de sorte à générer un enchevêtrement 3D de fibres selon une répartition irrégulière ou aléatoire avec fusion de boucles entre les fibres continues
- /A3/ Solidification de l'enchevêtrement 3D de fibres conformé à la cavité de moulage par immersion dans un liquide de refroidissement.

Selon un mode de réalisation, les buses sont pilotables, configurées de sorte à pouvoir changer la forme du rideau de fibres, et dans lequel on fournit une unité logique de traitement qui comprend un module de commande comprenant un microprocesseur et une mémoire comprenant des instructions pour, en /A1/, piloter les buses de sorte à générer un rideau de fibres fondues, de forme variable au cours du l'extrusion suivant la direction en longueur et/ou la direction en largeur de la filière extrusion .

Selon un mode de réalisation, en particulier selon le procédé de la figure 3, la masse volumique apparente peut être homogène suivant la longueur et la largeur de la couche. La densité du nombre de buses d'extrusion est ainsi homogène suivant la direction en longueur de la filière d'extrusion. Selon d'autre mode de réalisation, il est possible d'avoir différentes zones de différentes masses volumiques apparentes.

La matelassure obtenue à l'issue du procédé illustré à la figure 3, ou de manière générale, peut générer une matelassure avec un enchevêtrement 3D de la matelassure 3 présente une masse volumique apparente comprise entre 20kg/m³ et 70 kg/m³, en particulier entre 45 kg/m³ et 65 kg/m³, et de manière sensiblement homogène ou non. Une telle densité de matelassure est optimisée pour assurer un confort et un soutien de l'occupant.

Selon les constations des inventeurs, en particulier les chants de la matelassure obtenue selon le procédé de la figure 3 ne sont pas calandrés, voire résultent typiquement des découpes notamment transversales. Ces chants présentent un état de surface non attrayant, même lorsque le chant est recouvert par une coiffe. En effet lorsque la coiffe est tendue sur un chant présentant un état d surface irrégulier, la coiffe, souple, reproduit les irrégularités de surface du chant. L'étape /B/ du procédé de fabrication selon la présente divulgation permet de répondre à ce problème.

Le pressage à chaud sur tout ou partie de la périphérie entraîne une compression et une réduction partielle de l'épaisseur EP de l'enchevêtrement 3D d'au moins 60%, voire d'au moins 70%, voire d'au moins 80% suivant l'épaisseur.

Le pressage à chaud est typiquement réalisé à une température comprise entre 160°C et 190°C, au moins au niveau de la périphérie de la matelassure. Le pressage à chaud est typiquement une étape de thermoformage, au cours de laquelle on applique la matelassure en pression entre un premier moule M1 et un deuxième moule M2.

De manière générale et comme visible à la figure 6, le pressage à chaud en /B/ génère une bordure Bdr densifiée et rigidifiée qui est attenante par une extrémité proximale Exp à la zone centrale de la matelassure, et qui présente une extrémité distale libre Exd. La bordure densifiée et rigidifiée Brd en /A/ présente une première face F1 s'étendant de préférence en prolongement d'une des deux faces Fa1, Fa2 de la portion centrale de la matelassure 3, telle que par exemple une face supérieure de la matelassure. La deuxième face F2 est décalée, à savoir qu'elle ne prolonge pas l'une ou l'autre des deux faces Fa1, Fa2 de la portion centrale de la matelassure.

La bordure densifiée et rigidifiée Brd s'étend suivant son épaisseur EP1, sur une portion de l'épaisseur EP2 de la zone centrale. L'épaisseur EP1 de la bordure rigidifiée et densifiée est typiquement inférieure à 50% de l'épaisseur EP2 de la portion centrale, voire inférieure à 40%, voire inférieure à 30% de l'épaisseur EP1 de la portion centrale. La bordure densifiée et rigidifié Brd s'étend en longueur le long du chant de la périphérie, et en largeur, depuis son extrémité proximale Exp jusqu'à son extrémité distale Exd.

De manière générale, et comme illustrée à la figure 6, la bordure densifiée et rigidifiée Brd obtenue en /B/ forme un épaulement avec un chant libre CHL de la zone centrale la matelassure. On entend par chant libre CHL de la zone centrale de la matelassure, la portion du chant de la zone centrale qui est non attenante à la bordure rigidifiée et densifiée Brd, et qui est donc visible à l'issue de l'étape /B/ de pressage à chaud.

Selon le procédé selon la présente divulgation, l'étape /B/ est suivie par :
- /C/ le repliage de la bordure densifiée et rigidifiée Brd contre le chant libre CHL de la zone centrale.

La bordure rigidifié et densifiée Brd est repliée par pliage autour de son extrémité proximale Exp, typiquement autour de la direction en longueur de la bordure rigidifiée et densifiée. La bordure densifiée et rigidifiée Brd est repliée, notamment sensiblement à 90°, de sorte à couvrir le chant libre CHL de la portion centrale de la matelassure.

Notamment, et à cet effet, la dimension D1 en largeur de la bordure densifiée et rigidifiée Brd délimitée entre l'extrémité proximale Exp et l'extrémité distale Exd peut représenter entre 80% et 120% de la dimension de l'épaisseur EP2 de la zone centrale. En particulier la dimension D1 peut représenter typiquement 100% de l'épaisseur EP2.

Selon un mode de réalisation, le procédé peut comprendre tout ou partie des caractéristiques suivantes :
- les fibres sont des fibres creuses et/ou fibres pleines, de diamètre compris entre 0,2 mm et 2 mm, préférentiellement entre 0,3 mm et 1,5 mm,
- les fibres 5 comprennent un polymère thermoplastique, la composition des fibres comprenant au moins 95% en poids de PET,
- l'enchevêtrement 3D de la matelassure 5 présente une masse volumique apparente comprise entre 20kg/m³ et 70 kg/m³ , en particulier entre 45 kg/m³ et 65 kg/m³, en particulier en dehors de la ou des zones densifiées et rigidifiées.

La présente divulgation est encore relative à une matelassure de siège susceptible d'être obtenue selon le procédé selon la présente divulgation, la matelassure comprenant un enchevêtrement 3D de fibres 5 continues thermoplastiques disposées irrégulièrement typiquement aléatoirement, formant des boucles soudées entre elles entre les fibres, et dans laquelle :
- les fibres sont des fibres creuses et/ou fibres pleines, en particulier de diamètre compris entre 0,2 mm et 2 mm, préférentiellement entre 0,3 mm et 1,5 mm,
- les fibres 5 comprennent un polymère thermoplastique, la composition des fibres comprenant en particulier au moins 95% en poids de PET.

Selon la présente divulgation, la matelassure comprend une bordure périphérique densifiée et rigidifiée obtenue par pressage à chaud de l'enchevêtrement 3D sur tout ou partie de la périphérie.

L'enchevêtrement 3D de la matelassure 3 présente une masse volumique apparente comprise typiquement entre 20 kg/m³ et 70 kg/m³ en particulier entre 45 kg/m³ et 65 kg/m³ en dehors des zones densifiées et rigidifiées en particulier périphériques. La masse volumique apparente des zones densifiées et rigidifiées peut être supérieure à 100 lg/m³, par exemple comprise à titre indicatif entre 150 kg/m³ et 300 kg/m³.

Selon la présente divulgation, la bordure densifiée et rigidifiée Bdr est attenante par une extrémité proximale Exp à la zone centrale de la matelassure de moindre densité, et présente une extrémité distale libre Exd, la bordure densifiée et rigidifiée étant repliée contre un chant libre CHL de la zone centrale de la matelassure, en couvrant le chant libre CHL de la zone centrale.

La présente divulgation est encore relative à un siège de véhicule comprenant :
- une matelassure 3 selon la présente divulgation
- une coiffe CF recouvrant la matelassure, le coiffe recouvrant une surface supérieure de la matelassure, ainsi qu'un flanc FI de la matelassure, ledit flanc formé par la bordure densifiée et rigidifiée Brd, repliée contre le chant libre CHL de la zone centrale de la matelassure.

La bordure densifiée et rigidifiée Brd, ainsi repliée, présente avantageusement un état de surface régulier garantissant un aspect du flanc FI sans irrégularité lorsque ladite bordure Bdr est recouverte par la coiffe.

### Liste des signes de référence

- 1 : Siège,
- 2 : Structure,
- 3 : Matelassure,
- 3a : Couche de matelassure d'assise,
- Xa, Ya, Za : Directions en longueur, en largeur et en épaisseur de la couche de matelassure d'assise,
- 3b : Couche de matelassure de dossier,
- Xb, Yb, Zb : Directions en longueur, en largeur et en épaisseur de la couche de matelassure de dossier,
- 4 : Interface,
- 41s, 41i. Liens supérieurs et inférieures de contrôle de déplacement,
- 5 : Fibres,
- 6 Filière d'extrusion,
- 60 Buses d'extrusion,
- 7, 8. Organes de guidage contrarotatifs,
- Brd. Bordure rigidifiée et densifiée,
- D1. Direction en largeur (bordure rigidifiée et densifiée)
- EP. Epaisseur,
- EP1. Epaisseur (bordure densifiée et rigidifiée),
- EP2. Epaisseur (portion centrale),
- Exp. Extrémité proximale (bordure densifiée et rigidifiée),
- Exd. Extrémité distale (bordure densifiée et rigidifiée)
- M1, M2. Premier moule et deuxième moule (configurées pour le thermoformage des bordures rigidifiées et densifiées en périphérie),
- SUP. Suspension,
- ST. Support.

## Revendications

1. Procédé de fabrication d'une matelassure (3) de siège comprenant :
- /A/ Fourniture d'une matelassure (3) comprenant un enchevêtrement 3D de fibres thermoplastiques (5), continues disposées irrégulièrement formant des boucles soudées entre elles, la matelassure présentant une direction en longueur (Xa, Xb), une direction en largueur (Ya, ; Yb) et une direction en épaisseur (Za, Zb), ainsi qu'une bordure, en périphérie s'étendant le long des chants de la matelassure
- /B/ Pressage à chaud de l'enchevêtrement 3D de fibres, en tout ou partie de la périphérie de la matelassure, de sorte à réaliser une bordure densifiée et rigidifiée (Bdr) de la matelassure, par rapport à une zone centrale de la matelassure de moindre densité et de moindre rigidité,
et dans lequel le pressage à chaud en /B/ génère une bordure (Bdr) densifiée et rigidifiée qui est attenante par une extrémité proximale (Exp) à la zone centrale de la matelassure, et présentant une extrémité distale libre (Exd), et dans lequel la bordure densifiée et rigidifiée (Brd) s'étend suivant son épaisseur (EP1), sur une portion de l'épaisseur (Ep2) de la zone centrale, en longueur le long du chant de la périphérie, et en largeur, depuis son extrémité proximale (Exp) jusqu'à son extrémité distale (Exd),
et dans lequel la bordure densifiée et rigidifiée (Brd) forme un épaulement avec un chant libre (CHL) de la zone centrale la matelassure
et dans lequel le procédé prévoit :
- /C/ le repliage de la bordure densifiée et rigidifiée (Brd) contre le chant libre (CHL) de la zone centrale.

2. Procédé selon la revendication 1, dans lequel la bordure densifiée et rigidifiée (Brd) en /A/ présente une première face (F1) s'étendant en prolongement d'une des faces (Fa1, Fa2) de la portion centrale de la matelassure (3)..

3. Procédé selon la revendication 1 ou 2, dans lequel la dimension (D1) en largeur de la bordure densifiée et rigidifiée (Brd) délimitée entre l'extrémité proximale (Exp) et l'extrémité distale (Exd) est comprise entre 80% et 120% de la dimension de l'épaisseur (Ep2) de la zone centrale telle que 100% de l'épaisseur.

4. Procédé de fabrication d'une matelassure selon l'une des revendications 1 à 3 dans lequel l'étape de fourniture /A/ comprend :
- /A1/ Extrusion d'un polymère thermoplastique dans une filière d'extrusion (6) comprenant des buses d'extrusion (60) réparties suivant une direction en longueur (X6) et suivant une direction en largeur (Y6) de la filière d'extrusion, générant un rideau de fibres continues fondues, chutant par gravité,
- /A2/ Réception du rideau de fibres continues fondues chutant par gravité sur un ou des élément support (7, 8) avec une génération d'un enchevêtrement 3D de fibres selon une répartition irrégulière avec fusion de boucles entre les fibres continues
- /A3/ éventuellement solidification de l'enchevêtrement 3D de fibres par immersion dans un liquide de refroidissement.

5. Procédé selon l'une des revendications 1 à 4, dans lequel le pressage à chaud sur tout ou partie de la périphérie entraîne une compression et une réduction partielle de l'épaisseur (EP) de l'enchevêtrement 3D d'au moins 60%, voire d'au moins 70%, voire d'au moins 80%.

6. Procédé selon l'une revendications 1 à 5 présentant tout ou partie des caractéristiques suivantes
- les fibres sont des fibres creuses et/ou fibres pleines, de diamètre compris entre 0,2 mm et 2 mm, préférentiellement entre 0,3 mm et 1,5 mm,
- les fibres (5) comprennent un polymère thermoplastique, la composition des fibres comprenant au moins 95% en poids de PET,
et dans lequel l'enchevêtrement 3D de la matelassure (5) présente une masse volumique apparente comprise entre 20kg/m³ et 70 kg/m³ , en particulier entre 45 kg/m³ et 65 kg/m³ en dehors de la ou des zones densifiées et rigidifiées.

7. Matelassure de siège susceptible d'être obtenue selon le procédé des revendications 1 à 6, comprenant un enchevêtrement 3D de fibres (5) continues thermoplastiques disposées irrégulièrement, formant des boucles soudées entre elles entre les fibres, **caractérisée en ce qu'**elle comprend une bordure (Bdr) périphérique, densifiée et rigidifiée, obtenue par pressage à chaud de l'enchevêtrement 3D sur tout ou partie de la périphérie de la matelassure, qui est attenante par une extrémité proximale (Exp) à la zone centrale de la matelassure de moindre densité, et présente une extrémité distale libre (Exd), la bordure densifiée et rigidifiée étant repliée contre un chant libre (CHL) de la zone centrale de la matelassure, en couvrant le chant libre (CHL) de la zone centrale.

8. Matelassure de siège selon la revendication 7, dans laquelle :
- les fibres (5) sont des fibres creuses et/ou fibres pleines, en particulier de diamètre compris entre 0,2 mm et 2 mm, préférentiellement entre 0,3 mm et 1,5 mm,
- les fibres (5) comprennent un polymère thermoplastique, la composition des fibres comprenant en particulier au moins 95% en poids de PET,
la matelassure comprenant la bordure périphérique densifiée et rigidifiée (Brd) obtenue par pressage à chaud de l'enchevêtrement 3D sur tout ou partie de la périphérie
et dans laquelle l'enchevêtrement 3D de la matelassure (5) présente une masse volumique apparente comprise entre 20 kg/m³ et 70 kg/m³ en particulier entre 45 kg/m³ et 65 kg/m³ en dehors des zones densifiées et rigidifiées périphériques.

9. Siège de véhicule comprenant :
- une matelassure (3) selon la revendication 8
- une coiffe (CF) recouvrant la matelassure, le coiffe recouvrant une surface supérieure de la matelassure, ainsi qu'un flanc de la matelassure, le flanc formé par la bordure densifiée et rigidifiée (Brd), repliée contre le chant libre (CHL) de la zone centrale de la matelassure.

## Patentansprüche

1. Verfahren zum Herstellen einer Sitzpolsterung (3), umfassend:
- /A/ Bereitstellen einer Polsterung (3), umfassend eine 3D-Verflechtung unregelmäßig angeordneter thermoplastischer Endlosfasern (5), die miteinander verschweißte Schlaufen bilden, wobei die Polsterung eine Längenrichtung (Xa, Xb), eine Breitenrichtung (Ya, Yb) und eine Dickenrichtung (Za, Zb) aufweist und sich an dem Umfang ein Rand entlang der Kanten der Polsterung erstreckt,
- /B/ Heißpressen der 3D-Faserverflechtung an dem gesamten oder einem Teil des Umfangs der Polsterung, um einen verdichteten und versteiften Rand (Bdr) der Polsterung relativ zu einer zentralen Zone der Polsterung mit geringerer Dichte und geringerer Steifigkeit zu erzeugen,
und wobei das Heißpressen bei /B/ einen verdichteten und versteiften Rand (Bdr) erzeugt, der mit einem proximalen Ende (Exp) an die zentrale Zone der Polsterung angrenzt und ein freies distales Ende (Exd) aufweist, und wobei sich der verdichtete und versteifte Rand (Brd) entlang seiner Dicke (EP1), über einen Abschnitt der Dicke (Ep2) der zentralen Zone, der Länge nach entlang der Kante des Umfangs und der Breite nach von seinem proximalen Ende (Exp) bis zu seinem distalen Ende (Exd) erstreckt,
und wobei der verdichtete und versteifte Rand (Brd) eine Schulter mit einer freien Kante (CHL) der zentralen Zone der Polsterung bildet,
und wobei das Verfahren bereitstellt:
- /C/ Falten des verdichteten und versteiften Randes (Brd) gegen die freie Kante (CHL) der zentralen Zone.

2. Verfahren nach Anspruch 1, wobei der verdichtete und versteifte Rand (Brd) bei /A/ eine erste Fläche (F1) aufweist, die sich in einer Linie mit einer der Flächen (Fa1, Fa2) des zentralen Abschnitts der Polsterung (3) erstreckt.

3. Verfahren nach Anspruch 1 oder 2, wobei die Breitenabmessung (D1) des verdichteten und versteiften Randes (Brd), der zwischen dem proximalen Ende (Exp) und dem distalen Ende (Exd) begrenzt ist, zwischen 80 % und 120 % der Abmessung der Dicke (Ep2) der zentralen Zone beträgt, wie 100 % der Dicke.

4. Verfahren zum Herstellen einer Polsterung nach einem der Ansprüche 1 bis 3, wobei der Schritt des Bereitstellens /A/ Folgendes umfasst:
- /A1/ Extrudieren eines thermoplastischen Polymers in einem Extrusionswerkzeug (6), das Extrusionsdüsen (60) umfasst, die in einer Längenrichtung (X6) und in einer Breitenrichtung (Y6) des Extrusionswerkzeugs verteilt sind, Erzeugen eines Vorhangs von geschmolzenen Endlosfasern, der durch Schwerkraft fällt,
- /A2/ Aufnehmen des Vorhangs aus geschmolzenen Endlosfasern, der durch Schwerkraft fällt, auf einem oder mehreren Stützelementen (7, 8), wobei eine 3D-Faserverflechtung gemäß einer unregelmäßigen Verteilung mit Schlaufen erzeugt wird, die zwischen den Endlosfasern schmelzen,
- /A3/ gegebenenfalls Verfestigen der 3D-Faserverflechtung mittels Eintauchen in eine Kühlflüssigkeit.

5. Verfahren nach einem der Ansprüche 1 bis 4, wobei das Heißpressen über den gesamten oder einen Teil des Umfangs zu einer teilweisen Komprimierung und Reduzierung der Dicke (EP) der 3D-Verflechtung um mindestens 60 %, oder sogar um mindestens 70 %, oder sogar um mindestens 80 % führt.

6. Verfahren nach einem der Ansprüche 1 bis 5, aufweisend alle oder einige der folgenden Merkmale:
- die Fasern sind Hohlfasern und/oder Vollfasern mit einem Durchmesser zwischen 0,2 mm und 2 mm, vorzugsweise zwischen 0,3 mm und 1,5 mm,
- die Fasern (5) umfassen ein thermoplastisches Polymer, wobei die Zusammensetzung der Fasern zu mindestens 95 Gew.-% PET umfasst,
und wobei die 3D-Verflechtung der Polsterung (5) eine scheinbare Dichte zwischen 20 kg/m³ und 70 kg/m³, insbesondere zwischen 45 kg/m³ und 65 kg/m³ außerhalb der verdichteten, versteiften Zone(n) aufweist.

7. Sitzpolsterung, erhältlich nach dem Verfahren der Ansprüche 1 bis 6, umfassend eine 3D-Verflechtung unregelmäßig angeordneter thermoplastischer Endlosfasern (5), die zwischen den Fasern miteinander verschweißte Schlaufen bilden, **dadurch gekennzeichnet, dass** sie einen peripheren, verdichteten und versteiften Rand (Bdr) umfasst, der durch Heißpressen der 3D-Verflechtung über den gesamten oder einen Teil des Umfangs der Polsterung erhalten wird, der mit einem proximalen Ende (Exp) an die zentrale Zone der Polsterung mit geringerer Dichte angrenzt und ein freies distales Ende (Exd) aufweist, wobei der verdichtete und versteifte Rand gegen eine freie Kante (CHL) der zentralen Zone der Polsterung gefaltet ist und die freie Kante (CHL) der zentralen Zone bedeckt.

8. Sitzpolsterung nach Anspruch 7, wobei:
- die Fasern (5) Hohlfasern und/oder Vollfasern insbesondere mit einem Durchmesser zwischen 0,2 mm und 2 mm, vorzugsweise zwischen 0,3 mm und 1,5 mm, sind,
- die Fasern (5) ein thermoplastisches Polymer umfassen, wobei die Zusammensetzung der Fasern insbesondere zu mindestens 95 Gew.-% PET umfasst,
die Polsterung den verdichteten und versteiften peripheren Rand (Brd) umfasst, der durch Heißpressen der 3D-Verflechtung über den gesamten oder einen Teil des Umfangs erhalten wird,
und wobei die 3D-Verflechtung der Polsterung (5) eine scheinbare Dichte zwischen 20 kg/m³ und 70 kg/m³, insbesondere zwischen 45 kg/m³ und 65 kg/m³ außerhalb der peripheren verdichteten und versteiften Zonen aufweist.

9. Fahrzeugsitz, umfassend:
- eine Polsterung (3) nach Anspruch 8,
- eine Abdeckung (CF), die die Polsterung bedeckt, wobei die Abdeckung eine obere Oberfläche der Polsterung und eine Flanke der Polsterung bedeckt, wobei die Flanke durch den verdichteten und versteiften Rand (Brd) gebildet wird, der gegen die freie Kante (CHL) der zentralen Zone der Polsterung gefaltet ist.

## Claims

1. Method for manufacturing a seat padding (3) comprising:
- /A/ providing a padding (3) comprising a 3D entanglement of irregularly arranged continuous thermoplastic fibers (5) forming loops welded together, the padding having a length direction (Xa, Xb), a width direction (Ya, ; Yb) and a thickness direction (Za, Zb), and a border on the periphery extending along the edges of the padding
- /B/ hot pressing the 3D entanglement of fibers, at all or part of the periphery of the padding, so as to produce a densified and stiffened border (Bdr) of the padding, relative to a central zone of the padding of less density and of less rigidity,
and wherein the hot pressing at /B/ generates a densified and stiffened border (Bdr) which adjoins with a proximal end (Exp) the central zone of the padding, and has a free distal end (Exd), and wherein the densified and stiffened border (Brd) extends along its thickness (EP1), over a portion of the thickness (Ep2) of the central zone, lengthwise along the edge of the periphery, and widthwise from its proximal end (Exp) to its distal end (Exd),
and wherein the densified and stiffened border (Brd) forms a shoulder with a free edge (CHL) of the central zone of the padding
and wherein the method provides for:
- /C/ the folding of the densified and stiffened border (Brd) against the free edge (CHL) of the central zone.

2. Method according to claim 1, wherein the densified and stiffened border (Brd) in /A/ has a first face (F1) extending in line with one of the faces (Fa1, Fa2) of the central portion of the padding (3).

3. Method according to claim 1 or 2, wherein the width dimension (D1) of the densified and stiffened border (Brd) delimited between the proximal end (Exp) and the distal end (Exd) is between 80% and 120% of the dimension of the thickness (Ep2) of the central zone, such as 100% of the thickness.

4. Method for manufacturing a padding according to any of claims 1 to 3, wherein the step of providing /A/ comprises:
- /A1/ extruding a thermoplastic polymer in an extrusion die (6) comprising extrusion nozzles (60) distributed in a length direction (X6) and in a width direction (Y6) of the extrusion die, generating a curtain of continuous molten fibers, falling by gravity,
- /A2/ receiving the curtain of continuous molten fibers falling by gravity on one or more support elements (7, 8) with a 3D entanglement of fibers being generated according to an irregular distribution with loops melting between the continuous fibers
- /A3/ optionally solidifying the 3D entanglement of fibers by immersion in a cooling liquid.

5. Method according to any of claims 1 to 4, wherein the hot pressing over all or part of the periphery results in a partial compression and reduction of the thickness (EP) of the 3D entanglement by at least 60%, or even by at least 70%, or even by at least 80%.

6. Method according to any of claims 1 to 5, having all or some of the following features
- the fibers are hollow fibers and/or solid fibers, with a diameter of between 0.2 mm and 2 mm, preferentially between 0.3 mm and 1.5 mm,
- the fibers (5) comprise a thermoplastic polymer, the composition of the fibers comprising at least 95% by weight of PET,
and wherein the 3D entanglement of the padding (5) has an apparent density of between 20 kg/m³ and 70 kg/m³, in particular between 45 kg/m³ and 65 kg/m³ outside the densified and stiffened zone(s).

7. Seat padding obtainable according to the method of claims 1 to 6, comprising a 3D entanglement of irregularly arranged continuous thermoplastic fibers (5), forming loops welded together between the fibers,
**characterized in that** it comprises a peripheral, densified and stiffened border (Bdr), obtained by hot pressing the 3D entanglement over all or part of the periphery of the padding, which adjoins with a proximal end (Exp) the central zone of the padding of less density, and has a free distal end (Exd), the densified and stiffened border being folded against a free edge (CHL) of the central zone of the padding, covering the free edge (CHL) of the central zone.

8. Seat padding according to claim 7, wherein:
- the fibers (5) are hollow fibers and/or solid fibers, in particular with a diameter of between 0.2 mm and 2 mm, preferentially between 0.3 mm and 1.5 mm,
- the fibers (5) comprise a thermoplastic polymer, the composition of the fibers comprising in particular at least 95% by weight of PET,
the padding comprising the densified and stiffened peripheral border (Brd) obtained by hot pressing the 3D entanglement over all or part of the periphery
and wherein the 3D entanglement of the padding (5) has an apparent density of between 20 kg/m³ and 70 kg/m³ in particular between 45 kg/m³ and 65 kg/m³ outside the peripheral densified and stiffened zones.

9. Vehicle seat comprising:
- a padding (3) according to claim 8
- a cover (CF) covering the padding, the cover covering an upper surface of the padding, and a flank of the padding, the flank formed by the densified and stiffened border (Brd), folded against the free edge (CHL) of the central zone of the padding.
